# EUROPEAN PATENT APPLICATION

(11) **EP 1 088 584 A1**
(43) Date of publication of application: **04.04.2001**
(21) Application number: 00909749.4
(22) Date of filing: 17.03.2000
(51) Int. Cl.: B01J 13/14, C08J 9/10

(54) **PROCESS FOR PRODUCING MICROCAPSULES AND MICROCAPSULES OBTAINED THEREBY**

(30) Priority: 01.04.1999 JP 9539799; 27.05.1999 JP 14859299
(71) Applicant: Dai-Ichi Kogyo Seiyaku Co., Ltd., Kyoto-shi, Kyoto 600-8874 (JP)
(72) Inventor: KATAOKA, Hironori, Nara 636-0801 (JP); MURATA, Masaru, Omihachiman-shi, Shiga 523-0044 (JP)
(74) Representative: Frankland, Nigel Howard
(86) International application number: JP0001692
(87) International publication number: WO0059626

(57) **Abstract**

A method of manufacturing microcapsules by in-situ polymerization that provides for the stable manufacture of microcapsules having a powder material as a core material and melamine-formaldehyde resin as a wall film, and microcapsules having a strong and homogeneous melamine-formaldehyde resin based wall film obtained thereby. This method of manufacturing microcapsules makes component (B) react after mixing the following components (A) to (D) to prepare a dispersion of component (A), forming a melamine-formaldehyde resin based coating around a core material as the component (A) and thus manufacturing microcapsules containing a core material as the component (A) therein.
(A) Non-agrochemical core material powder.
(B) A hardly water-soluble melamine-formaldehyde resin based prepolymer.
(C) A condensate of formaldehyde and at least one of naphthalenesulfonic acid and alkylnaphthalenesulfonic acid, or salt thereof.
(D) Water medium.

## Description

### Technical Field

The present invention relates to a method of manufacturing microcapsules by in-situ polymerization that provides for the stable manufacture of microcapsules having a powder material as a core material and melamine-formaldehyde resin as a wall film, and uniform microcapsules obtained thereby.

### Background Art

It is conventionally well known that a hydrophobic core material can be microencapsulated by aminoaldehyde based resin. In particular, it is desirable to microencapsulate powdery core materials in various applications from the standpoint of preventing environmental contamination such as deterioration of working environment by drifting or the like.

However, with microcapsules having a powdery material for a core, the surfaces of a powdery material are less uniform than the surfaces of an oily material, and further the surface areas are large and a particle size distribution is also uneven. Therefore, when using conventional microencapsulation methods, it is difficult to manufacture uniform microcapsules, and it is hard to manufacture mono-core capsules. For instance, before becoming mono-core capsules, particles start coagulating with each other so that lumps are formed and thus a stable microcapsule water dispersion cannot be obtained.

Moreover, in conventional methods of manufacturing microcapsules, a melamine-formaldehyde resin prepolymer for use as a coating film material is highly water-soluble, so that microcapsules with insufficient strength were obtained

In view of these circumstances, an object of the present invention is to provide the method of manufacturing microcapsules that allows formation of a strong and homogeneous coating and stable manufacture of microcapsules, and to provide uniform microcapsules obtained by this method.

### Disclosure of Invention

In order to achieve the object above, a first aspect of the present invention is A method of manufacturing microcapsules comprising mixing the following components (A) to (D) wherein (A) is a non-agrochemical core material powder, (B) is a hardly water-soluble melamine-formaldehyde resin based prepolymer, (C) is a condensate of formaldehyde and at least one of naphthalenesulfonic acid and alkylnaphthalenesulfonic acid, or a salt thereof, and (D) is an aqueous medium, to prepare a dispersion of component (A), and reacting the hardly water-soluble melamine-formaldehyde resin based prepolymer of the component (B), thus forming a melamine-formaldehyde resin based coating around a core material formed from the component (A) and yielding microcapsules containing component (A) thereon as a core material.

Additionally, microcapsules obtained by the method of manufacturing microcapsules mentioned above are a second aspect of the invention.

The microcapsules have a core/shell structure wherein a core consisting of a core material of the component (A) is coated with a melamine-formaldehyde resin based coating, which is formed by reacting hardly water-soluble melamine-formaldehyde resin based prepolymer of the component (B). It has been found that, when making microcapsules with a powdery core, it is appropriate to use hardly water-soluble melamine-formaldehyde resin based prepolymer [component (B)] as a coating film material and also to use the component (C) as a dispersant for the mixing. Specifically, after a dispersion of component (A) is prepared by mixing the above-noted components (A) to (D), the hardly water-soluble melamine-formaldehyde resin based prepolymer as the component (B) is reacted.

As a result, the inventors discovered that a strong and homogeneous melamine-formaldehyde resin based coating may be formed around a core material of the component (A), and microcapsules containing the core material of the component (A) may be stably manufactured, thus arriving at the present invention.

Particularly, when the mixing ratio of the components (A) to (D) is set in a specific range respectively, a more stable microcapsule dispersion is obtained and microencapsulation becomes preferable. Also, the dispersing effects of the microcapsules further improve.

Moreover, in using the component (C) having a weight-average molecular weight by gel permeation chromatography (GPC) analysis in a specific range, the dispensability of the microcapsules is further improved.

Furthermore, if the component (B) is mixed after the component (C) in the mixing order of the components (A) to (D) in the step of preparing the dispersion of component (A) by mixing the components (A) to (D), the microencapsulation reaction and the dispensability of the microcapsules obtained thereby becomes further preferable.

In the microcapsules obtained by the subject method, when the ratio of (mean particle diameter of microcapsules)/[thickness of melamine-formaldehyde resin based coating (shell)] is a specific value or above, the protection of a core material at a core as well as, in the case that the core material is to be released, the balance between the protection of the core material and the release of the core material become further preferable.

### Best Mode for Carrying out the Invention

The modes for carrying out the present invention will be explained in detail.

The method of manufacturing a microcapsule dispersion of the present invention has a hardly water-soluble melamine-formaldehyde resin based prepolymer of the component (B) react, after the following components (A) to (D) are mixed, to prepare a dispersion of component (A). A melamine-formaldehyde resin based coating is formed around a core material of the component (A) thereby, manufacturing microcapsules containing a core material with the component (A) therein.

The components (A) to (D) comprise:
(A) a non-agrochemical core material powder constituting a core of the microcapsules.
(B) a hardly water-soluble melamine-formaldehyde resin based prepolymer.
(C) A condensate of formaldehyde and at least one of naphthalenesulfonic acid and alkylnaphthalenesulfonic acid, or a salt thereof.
(D) An aqueous medium.

For a non-agrochemical core material powder as the component (A) which constitutes the core of the microcapsules, shapes and so forth are not particularly limited as long as the powder can constitute the core of microcapsules.

Various types of powdery materials, except for pesticides, are included such as halogen type flame retardants, phosphorus type flame retardants, colouring agents such as pigments and colours, synthetic resin powders, organic peroxides such as benzoyl peroxide, and so forth. The shapes of the powder are not particularly limited, and may have any solid shape including generally spherical shapes.

According to the present invention, micro-encapsulation can be done with any shape of powder by forming a coating of a uniform thickness (shell). The core powders for use in the present invention generally include all the so-called powders in the field of chemistry, except for agrochemical powders. Among these powders, hydrophobic core powders are effective in manufacturing the microcapsules of the present invention. Moreover, the above-noted core powder is preferably 500 µm or less in mean particle diameter, more preferably, 0.1 to 100 µm in mean particle diameter, from the viewpoint of microencapsulating in a mono-core form.

The hardly water-soluble melamine-formaldehyde resin based prepolymer as the component (B) may be a coating film material in the method of manufacturing microcapsules of the present invention, and is an initial condensate obtained by the polymerization reaction of melamine and formaldehyde. In the present invention, moreover, the initial condensate indicates, not a complete resinification state, but rather a liquid state at ordinary temperature (25°C).

This melamine-formaldehyde resin based prepolymer is, for instance, manufactured as follows. Specifically, melamine powder and formalin (37 wt.% formaldehyde aqueous solution) are prepared. The melamine powder (a) and the formaldehyde (b) are mixed at the molar ratio of a : b = about 1 : 1.5 to 1 : 6.0, and are then heated at about 60°C or higher under an alkalescent condition, thus forming a melamine-formaldehyde resin prepolymer having broad characteristics from hardly water-soluble to highly water-soluble characteristics.

Furthermore, an alkylation reaction is performed on the melamine-formaldehyde resin prepolymer by using methyl alcohol, ethyl alcohol, isopropyl alcohol or butyl alcohol under a trace of an acid substance, or the prepolymer is crosslinked and modified by glycols such as ethylene glycol and propylene glycol, thus preparing a modified melamine-formaldehyde resin prepolymer for use. Particularly, in case of glycol modified prepolymers, the dissolved amount of water may be easily and properly controlled, which is preferable.

Thus, various kinds of melamine-formaldehyde resin based prepolymers are generally prepared, depending on reaction molar ratios between melamine and formaldehyde or alcohol denaturation and so forth. However, the melamine-formaldehyde resin based prepolymers for use in the present invention, including the modified products mentioned above, are hardly water-soluble. This property of being hardly water-soluble indicates that the dissolution amount of water relative to prepolymer is low. Specifically, the hardly water soluble melamine-formaldehyde resin based prepolymer as used in the present invention means that the dissolution amount of water is 2000 g or less at 25°C in comparison with 100 g of melamine-formaldehyde resin based prepolymer (solid portion). More preferably, the dissolution amount of water is 100 to 1400 g at 25°C. In other words, if the dissolution amount of water exceeds 2000 g, the water-soluble property would be increased and the targeted strong microcapsule coating and uniform microcapsules could not be manufactured. Hardly water-soluble melamine-formaldehyde resin based prepolymers suitable for use in the present invention include, for instance, glycol modified melamine-formaldehyde resin prepolymer (RIKENSOL PHW-35 (trade name) manufactured by Mikiriken Industry Co., Ltd., dissolution amount: 1000 to 1400 g of water relative to 100 g (weight of solid portion) of prepolymer at 25°C). In addition, for the above-noted melamine-formaldehyde resin based prepolymer, an aqueous solution of 50 to 80 wt.% is generally used.

Secondly, the component (C) is used as a so-called dispersant, and is a condensate of formaldehyde and at least one of naphthalenesulfonic acid and alkylnaphthalenesulfonic acid, or a salt thereof as mentioned above. The melamine-formaldehyde resin based prepolymer as the component (B) coagulates with a conventionally known dispersant or emulsifier such as polyoxyalkylenemonoether surface active agents and alkylphenylsulfonate, and is poorly dissolved in water.

In the condensate of formaldehyde and at least one of naphthalenesulfonic acid and alkylnaphthalenesulfonic acid, or the salt thereof, the molar ratio between formaldehyde and at least one of naphthalenesulfonic acid and alkylnaphthalenesulfonic acid is appropriately selected so as to match a preferable range of molecular weight.

The above condensate is prepared by first sulfonating naphthalene, alkylnaphthalene (for instance, methylnaphthalene, ethylnaphthalene, butylnaphthalene, dimethylnaphthalene, and the like; the number of alkyl groups is preferably 1 to 2 and the site of substitution is not particularly limited), or mixtures thereof with sulfuric acid, then adding water and formalin thereto, and condensating under acid. Subsequently, an alkali metal ion or alkaline earth metal ion, ammonia or amines may be used to form salts if necessary. Among these salts, an alkali metal salt such as sodium salt and potassium salt, and an alkaline earth metal salt such as calcium salt and magnesium salt are preferred. Sodium salt is particularly preferred. A preferable dispersant for use in the present invention is a sodium naphthalenesulfonate-formaldehyde condensate, and is preferably a condensate having a weight-average molecular weight of 500 to 8000 obtained by gel permeation chromatography (GPC) analysis, for example, LAVELIN FH-L (manufactured by Dai-ichi Kogyo Seiyaku Co., Ltd.). The use of such a dispersant improves the dispersibility of the microcapsules formed by condensation polymerization and solid non-agrochemical core material powder as a core material, allowing the manufacture of the desired microcapsules. The measurement conditions of GPC mentioned herein are as follows.
Column: TSK-GEL G-3000SW and G-4000SW manufactured by Toyo Soda Manufacturing Co., Ltd., and pre-column.
Eluant: acetonitrile/0.05 M sodium acetate aqueous solution = 40/60 in capacity, pH 6.88.
Flow velocity: 0.85ml/minute
Detecting wavelength: 254 nm
Standard substance: sodium polystyrenesulfonate

Moreover, when the component (C) is used as a dispersant, a conventionally known dispersant or emulsifier such as anionic surface active agents, nonionic surface active agents and ampholytic surface active agents may be applied jointly as long as the application is within the range of maintaining the dissolving property of this dispersant in water.

For the water medium as the component (D), water is normally used.

Then, each mixing ratio (in wt.%) of the components (A) to (D) will be described when the total amount of the components (A) to (D) is 100 wt.%.

It is preferred to have the non-agrochemical core powder as the component (A) in the range of 1 to 30 wt.%, more preferably, of 3 to 20 wt.%. Specifically, it is not preferred from an economic standpoint when the powder amount is too small such as less than 1 wt.%. To the contrary, in exceeding 30 wt.%, a stable microcapsule dispersion cannot be obtained.

It is preferred to have the hardly water-soluble melamine-formaldehyde resin based prepolymer as the component (B) in the range of 1 to 30 wt.%, more preferably, of 10 to 20 wt.%. Specifically, it will be difficult to microencapsulate each granule of the core powder as the component (A) outside of the range.

It is preferred to have the component (C) in the range of 1 to 20 wt.%, more preferably, of 1 to 10 wt.%. Specifically, dispersing effects are likely to deteriorate when the condensate/salt amount is too small such as less than 1 wt.%. To the contrary, in exceeding 20 wt.%, the dispersibility does not seem to improve and the cost is likely to increase.

By adding the water medium as the component (D) to the total amount of the components (A) to (C), the total amount becomes 100 wt.%.

The method of manufacturing microcapsules by using the components (A) to (D) now will be described.

The microcapsules relating to the present invention may be manufactured, for example, as follows. In other words, a dispersion of component (A) is prepared by mixing the components (A) to (D). In the preparation, it is especially preferred to prepare the dispersion of component (A) by mixing the component (B) after the component (C) in mixing the components (A) to (D). It is preferred to mix each component mentioned above at a mixing speed of 100 to 500 rpm, more preferably, 200 to 400 rpm, in consideration of microencapsulation reaction in the following step and the dispersibility of the microcapsules obtained thereby.

The pH of the dispersion prepared thereby is adjusted to 3 to 7 by using an organic acid such as citric acid and lactic acid and an inorganic acid such as hydrochloric acid and sulfuric acid.

Then, as the dispersion is continuously mixed at the rotational speed of 100 to 500 rpm and at 40 to 80°C in temperature, the resinification reaction of the prepolymer as the component (B) begins around an individual non-agrochemical core powder as the component (A), individually encapsulating the core powder and providing a stable water dispersion of the microcapsules. Subsequently, the mixing is continued for 5 to 6 hours to complete the resinification reaction. Thus, a microcapsule water dispersion (suspension) containing a core material of the component (A) therein may be manufactured by forming a melamine-formaldehyde resin based coating.

The microcapsule water dispersion obtained as mentioned above may be used for various applications as it is, or only water may be removed from the water dispersion to yield microcapsules for various applications.

The methods of obtaining only microcapsules by separating water from the micropasule water dispersion are not particularly limited, and include conventionally known methods such as centrifugation, pressure filtration, pressure reducing suction filtration, and spray drying.

The microcapsules obtained thereby have a core/shell structure wherein individual granules of non-agrochemical core powder as the component (A) are coated with a melamine-formaldehyde resin based coating from the component (B), and the formed shell is homogeneous and strong.

The particle diameter of the microcapsules obtained thereby is influenced by the particle diameter of the core material as the component (A), and is also the same as the particle diameter of this core material. However, microcapsules with a particle diameter of 0.1 to 600 µm are generally obtained. The particle diameter of the microcapsules may be measured by, for example, a laser diffraction type particle-size distribution analyzer.

Moreover, in the microcapsules, (mean particle diameter of microcapsules)/[thickness of melamine-formaldehyde resin based coating (shell)] is preferably 5 or above, more preferably, 20 or above. Thus, as the (mean particle diameter of microcapsules)/[thickness of melamine-formaldehyde resin based coating (shell)] is at the above-specified value, protection of the core material at the core as well as the release of the core material in the case of releasing the core material preferably are balanced, so that the microcapsules may be used for various types of applications. In addition, the (mean particle diameter of microcapsules)/[thickness of melamine-formaldehyde resin based coating (shell)] may be measured, for instance, as follows. The particle diameter of the core material and the particle diameter of the microcapsules are measured respectively, and then the thickness of the coating (shell) of the microcapsules is calculated based on both measurements, which allows the calculation of the above ratios.

Examples will be explained along with comparative examples.

### Example 1

A microcapsule dispersion was manufactured as follows.

### (1) Suspension/emulsifying dispersion step

### Materials

(a) Core material: aromatic condensed-phosphoric acid ester based flame retardant of 6 µm in mean particle diameter (PX-200 manufactured by Daihachi Chemical Industry Co., Ltd.); 10 g
(b) Hardly water-soluble melamine-formaldehyde resin based prepolymer: 50 wt.% aqueous solution of glycol modified melamine-formaldehyde resin prepolymer [RIKENSOL PHW-35 (trade name) manufactured by Mikiriken Industry Co., Ltd., dissolution amount: 1000 to 1400 g of water relative to 100 g (weight of solid portion) of prepolymer at 25°C] ; 5 g
(c) Dispersant: a sodium naphthalenesulfonate-formaldehyde condensate (50 wt.% aqueous solution of LAVELIN FH-L manufactured by Dai-ichi Kogyo Seiyaku Co., Ltd., 5240 in weight-average molecular weight by GPC measurement] ; 10 g
(d) 20% citric acid aqueous solution ; 1.0 g
(e) Water ; 74 g

### Procedure

The sodium naphthalenesulfonate-formaldehyde condensate (c) was dissolved in the water (e) at 50°C, thus preparing an aqueous solution. Into this aqueous solution, the glycol modified melamine-formaldehyde resin based prepolymer (b) was added under a mixing condition of 300 rpm in rotational speed, and was then followed by addition of the core material (a) with mixing to form an emulsified dispersion.

### (2) pH adjustment

Then, the dispersion was adjusted to pH 4.0 by the citric acid (d).

### (3) Micrenocapsulating step

The dispersion was continuously mixed for 5 hours at 50°C and 300 rpm in rotational speed. Condensation polymerization (in-situ polymerization) was performed to the glycol modified melamine-formaldehyde resin based prepolymer (b) on the surface of the aromatic condensed-phosphoric acid ester based flame retardant as a core material, forming a coating by this condensed material and thus manufacturing a microcapsule dispersion containing the aromatic condensed-phosphoric acid ester based flame retardant particles therein. The particle diameter of the microcapsules obtained thereby was measured by a laser diffraction type particle-size distribution analyzer (manufactured by Shimadzu Corp., SALD-2000) and was about 6.5 µm. Moreover, the (mean particle diameter of microcapsules)/[thickness of melamine-formaldehyde resin based coating (shell)] was 26.

### Example 2

10 g of aromatic condensed-phosphoric acid ester based flame retardant used as the core material in Example 1 was replaced by 20 g of benzoyl peroxide (10 µm in mean particle diameter), and the water was reduced by 10 g. Besides this, this example was performed as in Example 1, yielding a microcapsule dispersion containing benzoyl peroxide particles therein. The particle diameter of the microcapsules obtained thereby was measured by the laser diffraction type particle-size distribution analyzer (manufactured by Shimadzu Corp., SALD-2000) and was about 14.5 µm. Moreover, the (mean particle diameter of microcapsules)/[thickness of melamine-formaldehyde resin based coating (shell)] was 6.44.

### Example 3

The melamine-formaldehyde resin based prepolymer aqueous solution used in the Example 1 was replaced by 15 g of 50 wt.% glycol modified melamine-formaldehyde resin based prepolymer aqueous solution with 200 g in dissolution amount of water at 25°C. Besides this, this example was performed as in Example 1, yielding a microcapsule dispersion containing aromatic condensed-phosphoric acid ester based flame retardant particles therein. The particle diameter of the microcapsules obtained thereby was measured by the laser diffraction type particle-size distribution analyzer (manufactured by Shimadzu Corp., SALD-2000) and was about 6.4 µm. Moreover, the (mean particle diameter of microcapsules)/[thickness of melamine-formaldehyde resin based coating (shell)] was 32.

### Comparative Example 1

10 g of 50 wt.% sodium naphthalenesulfonate-formaldehyde condensate aqueous solution used as a dispersant in Example 1 was replaced by 5 g of sodium dodecylbenzenesulfonate. Besides this, this example was performed as in Example 1 for reaction. The microcapsules coagulated during the reaction, and a stable microcapsule water dispersion was not obtained.

### Comparative Example 2

The hardly water-soluble melamine-formaldehyde resin based prepolymer (b) in Example 1 was replaced by 5 g of water-soluble melamine-formaldehyde resin prepolymer [RIKENSOL MA-31 (trade name) manufactured by Mikiriken Industry Co., Ltd., dissolution amount: 2100 g or more of water relative to 100 g (weight of solid portion) of prepolymer at 25°C]. Besides this, this example was performed as in Example 1, yielding a microcapsule dispersion containing aromatic condensed-phosphoric acid ester based flame retardant particles therein. The particle diameter of the microcapsules obtained thereby was measured by the laser diffraction type particle-size distribution analyzer (manufactured by Shimadzu Corp., SALD-2000) and was about 15.4 µm. Moreover, the (mean particle diameter of microcapsules)/[thickness of melamine-formaldehyde resin based coating (shell)] was 3.3.

Each microcapsule obtained thereby was measured and evaluated based on the method indicated below. The results are shown in the following Table 1.

### Coating Strength of Microcapsules

The obtained microcapsules were placed on a glass plate, and a load of 250 g/cm² was added. As a result, possible rupture in the coating (shell portion) of the microcapsules was determined by a microscope.

**Table 1**

| | | Coating Strength of Microcapsules |
|---|---|---|
| Example | 1 | No rupture |
| | 2 | No rupture |
| | 3 | No rupture |
| Comparative Example | 1 | Coagulation of microcapsules; |
| | | No water dispersion obtained |
| | 2 | Ruptured |

The results in Table 1 indicate that microcapsules with a highly strong coating were obtained in the Examples. To the contrary, in Comparative Example 1 wherein sodium dodecylbenzenesulfonate was used, the microcapsules coagulated, and a stable microcapsule water dispersion was not obtained. Additionally, the microcapsules had a weaker coating strength in Comparative Example 2 wherein highly water-soluble, instead of hardly water-soluble, melamine-formaldehyde resin based prepolymer was used, than in the Examples.

### Industrial Applicability

As described above, the present invention causes the hardly water-soluble melamine-formaldehyde resin based prepolymer of the component (B) to react after mixing the above-noted components (A) to (D) to prepare a dispersion of component (A). A melamine-formaldehyde resin based coating is formed around a core material as the component (A) thereby, thus stably manufacturing microcapsules containing a core material as the component (A) therein. Therefore, the obtained microcapsules are formed with a strong and homogeneous coating. Accordingly, even when these microcapsules are transported, stored or the like, the core material constituting the core portion is protected and, at the same time, may be released at a preferable time and used for various applications.

Especially when the mixing ratio of the above-noted (A) to (D) is within a specific range respectively, a more stable microcapsule dispersion is obtained, preferably microencapsulating and further improving the dispersing effects of microcapsules.

Moreover, when the component (C) has weight-average molecular weight by GPC analysis in a specific range, the dispersibility of microcapsules further improves.

Furthermore, if, in the step of preparing a dispersion of component (A) by mixing the components (A) to (D), the component (B) is mixed after the component (C) in the mixing order of the components (A) to (D), the microencapsulation reaction and the dispersibility of the microcapsules obtained thereby become further preferable.

In the microcapsules obtained thereby, when (mean particle diameter of microcapsules)/[thickness of melamine-formaldehyde resin based coating (shell)] is at a specific value or above, the protection of a core material as well as, in the case of releasing the core material, the balance between the protection and the release become more preferable.

## Claims

1. A method of manufacturing microcapsules comprising mixing the following components (A) to (D) to prepare a dispersion of component (A), and reacting a hardly water-soluble melamine-formaldehyde resin based prepolymer as the component (B), thus forming a melamine-formaldehyde resin based coating around a core material as the component (A) and yielding microcapsules containing a core material as the component (A) therein: wherein
(A) non-agrochemical core material powder constituting a core of microcapsules;
(B) a hardly water-soluble melamine-formaldehyde resin based prepolymer;
(C) a condensate of formaldehyde and at least one of naphthalenesulfonic acid and alkylnaphthalenesulfonic acid, or a salt thereof; and
(D) water medium.

2. The method of manufacturing microcapsules according to Claim 1, wherein the hardly water-soluble melamine-formaldehyde resin based prepolymer as the component (B) is a prepolymer in which a dissolution amount of water is 2000 g or less at 25°C compared with 100 g (solid portion) of melamine-formaldehyde resin based prepolymer.

3. The method of manufacturing microcapsules according to Claim 1 or 2, wherein the amounts of the components (A) to (D) are 1 to 30 wt.% of component (A), 1 to 30 wt.% of component (B), 1 to 20 wt.% of component (C), and the rest for component (D) when a total amount of components (A) to (D) is 100 wt%.

4. The method of manufacturing microcapsules according to one of Claims 1 to 3, wherein the component (C) has a weight-average molecular weight by gel permeation chromatography (GPC) analysis in a range of 500 to 8000.

5. The method of manufacturing microcapsules according to one of Claims 1 to 4, wherein, in the step of mixing the components (A) to (D) to prepare a dispersion of component (A), component (B) is mixed after component (C) in the mixing order of the components (A) to (D).

6. Microcapsules obtained by the method of manufacturing microcapsules according to one of Claims 1 to 5, wherein the microcapsules have a core/shell structure with a core, consisting of a core material of component (A), being coated with a melamine-formaldehyde resin based coating, which is formed by reacting a hardly water-soluble melamine-formaldehyde resin based prepolymer as component (B).

7. The microcapsules according to Claim 6, wherein (mean particle diameter of microcapsules)/[thickness of melamine-formaldehyde resin based coating (shell)] is 5 or above in the microcapsules.
